(19) **Europäisches Patentamt / European Patent Office / Office européen des brevets**

(11) **EP 4 783 255 A1**

(12) **EUROPEAN PATENT APPLICATION**
published in accordance with Art. 153(4) EPC

(43) Date of publication:
**29.07.2026 Bulletin 2026/31**

(21) Application number: **24868497.9**

(22) Date of filing: **23.08.2024**

(51) International Patent Classification (IPC):
*H01M 4/36* (2006.01)    *H01M 4/587* (2010.01)
*H01M 4/62* (2006.01)    *C01B 32/956* (2017.01)
*H01M 4/02* (2006.01)

(52) Cooperative Patent Classification (CPC):
**C01B 32/158; C01B 32/956; H01M 4/02;**
**H01M 4/36; H01M 4/587; H01M 4/62;**
C01B 2202/22; C01P 2004/03; C01P 2004/51;
C01P 2004/61; C01P 2004/84; C01P 2006/10;
C01P 2006/12; C01P 2006/40; Y02E 60/10

(86) International application number:
**PCT/KR2024/012647**

(87) International publication number:
**WO 2025/063518 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.09.2023 KR 20230126355**

(71) Applicants:
• **Posco Future M Co., Ltd.**
**Pohang-si, Gyeongsangbuk-do 37918 (KR)**
• **POSCO Holdings Inc.**
**Pohang-si, Gyeongsangbuk-do 37859 (KR)**

(72) Inventors:
• YOU, Seung Jae
Pohang-si, Gyeongsangbuk-do 37918 (KR)
• WOO, Jung Gyu
Pohang-si, Gyeongsangbuk-do 37859 (KR)
• KIM, Daehyun
Pohang-si, Gyeongsangbuk-do 37859 (KR)
• JO, Hyun-Chul
Pohang-si, Gyeongsangbuk-do 37859 (KR)

(74) Representative: **Meissner Bolte Partnerschaft mbB**
**Patentanwälte Rechtsanwälte**
**Postfach 86 06 24**
**81633 München (DE)**

(54) **ANODE ACTIVE MATERIAL FOR LITHIUM SECONDARY BATTERY AND METHOD FOR MANUFACTURING SAME**

(57) The present invention relates to a negative electrode active material for a lithium secondary battery and a method for manufacturing the same. Specifically, the present invention relates to a negative electrode active material comprising a plurality of amorphous carbon layers on nano silicon-crystalline carbon composite particles, and a method for manufacturing the same.

[FIG. 1]

EP 4 783 255 A1

**Description**

**[TECHNICAL FIELD]**

The present invention relates to a negative electrode active material for a lithium secondary battery and a method for manufacturing the same. Specifically, it relates to a negative electrode active material comprising a plurality of amorphous carbon layers on nano silicon-crystalline carbon composite particles and a method for manufacturing the same.

**[BACKGROUND ART]**

Lithium ion batteries are currently the most widely used secondary battery systems for portable electronic communication devices, electric vehicles, and energy storage systems. These lithium ion batteries have advantages such as high energy density, high operating voltage, and relatively low self-discharge rate compared to commercial aqueous secondary batteries (Ni-Cd, Ni-MH, etc.), making them a focus of interest. However, considering more efficient usage time in portable devices and improvement of energy characteristics in electric vehicles, improvements in electrochemical properties remain technical problems to be solved. Accordingly, much research and development is currently being conducted on the four major raw materials: positive electrodes, negative electrodes, electrolytes, and separators.

Among these raw materials, graphite-based materials exhibiting excellent capacity retention characteristics and efficiency have been commercialized for the negative electrode. However, the reality is that the relatively low theoretical capacity value ($LiC_6$ : 372 mAh/g) and low discharge capacity ratio of graphite-based materials are somewhat insufficient to meet the characteristics of high energy and high output density required by the market. Therefore, many researchers are interested in Group IV elements (Si, Ge, Sn) on the periodic table. Among them, Si is particularly spotlighted as a very attractive material due to its very high theoretical capacity ($Li_{15}Si_4$ : 3600 mAh/g) and low operating voltage (~0.1 V vs. Li/Li$^+$) characteristics. However, general Si-based negative electrode materials involve a volume change reaching 300% during cycles, leading to particle cracking and loss of electrical contact due to continuous charge-discharge, resulting in low discharge capacity ratio characteristics, which makes application to actual batteries difficult.

To solve these problems, research is continuously being conducted to improve the conductivity of materials through compositing with crystalline carbon, pitch-derived carbon, and silicon nanoparticles.

Among conventional technologies, there exists a technology that includes Si, SiO, or Si-metal (metal combination excluding Si) in the core portion and provides an amorphous carbon coating layer on the core portion to impart conductivity and improve lifespan characteristics. However, there is a disadvantage that a decrease in reversibility of charge-discharge, particularly initial efficiency characteristics, may occur due to the carbon-based surface coating.

Meanwhile, there exists a conventional technology disclosing a high-capacity negative electrode material in a form where a composite material is formed of silicon nanoparticles and graphite particles through high-energy ball milling, and the surface of the composite material is covered with an amorphous carbon layer. However, when nano-sized silicon is embedded in graphite particles as in the aforementioned conventional technology, there is a disadvantage that side reactions such as damage to graphite particles occur due to the expansion of silicon during initial charging, thereby deteriorating the reversibility of charge-discharge.

**[DETAILED DESCRIPTION OF THE INVENTION]**

**[TECHNICAL PROBLEM]**

The technical problem to be solved by the present invention is to provide a negative electrode active material with improved material conductivity through compositing of crystalline carbon, pitch-derived carbon, and silicon nanoparticles.

Another technical problem to be solved by the present invention is to provide a method for manufacturing a negative electrode active material having the aforementioned advantages.

**[TECHNICAL SOLUTION]**

A negative electrode active material according to an embodiment of the present invention includes a silicon-carbon composite core portion having a structure in which silicon nanoparticles and crystalline carbon particles are bound within an amorphous carbon matrix, and an amorphous carbon coating layer positioned on the core portion, wherein an average particle diameter of the crystalline carbon particles is 8 $\mu$m to 10 $\mu$m, and a bulk density of the crystalline carbon particles may be 0.2 g/cc or less.

A method for manufacturing a negative electrode active material according to another embodiment of the present invention may be a method for providing a negative electrode active material, comprising: preparing a slurry by mixing silicon nanoparticles, crystalline carbon particles, soft carbon, and a solvent; forming a silicon-carbon composite precursor; and forming an amorphous carbon coating layer by mixing an amorphous carbon material with the silicon-carbon composite precursor and then heat-treating the mixture, wherein an average particle diameter of the crystalline carbon particles is 8 $\mu$m to 10 $\mu$m, and a bulk density of the crystalline carbon particles is 0.2 g/cc or less.

[ADVANTAGEOUS EFFECTS]

The negative electrode active material according to an embodiment of the present invention controls the average particle diameter ($D_{50}$) of crystalline carbon to 8 to 10 $\mu$m, and provides a negative electrode active material with improved material conductivity through compositing of the crystalline carbon or pitch-derived carbon and silicon nanoparticles, thereby improving lifespan characteristics according to repetition of capacity and charge-discharge cycles when applied to a lithium secondary battery.

The method for manufacturing a negative electrode active material according to another embodiment of the present invention controls the average particle diameter ($D_{50}$) of crystalline carbon to 8 to 10 $\mu$m, and can provide a negative electrode active material with improved material conductivity through compositing of the crystalline carbon, pitch-derived carbon, and silicon nanoparticles.

[BRIEF DESCRIPTION OF DRAWINGS]

FIG. 1 shows a schematic diagram of a negative electrode active material 100 for a lithium secondary battery having a silicon-carbon composite structure according to an embodiment of the present invention.

FIG. 2 shows a schematic diagram of a negative electrode active material 200 for a lithium secondary battery having a silicon-carbon composite structure including carbon nanotubes (CNTs) in a core portion according to an embodiment of the present invention.

FIG. 3 shows a schematic diagram according to a manufacturing process of a negative electrode active material 200 having a silicon-carbon composite structure including carbon nanotubes (CNTs) according to an embodiment of the present invention.

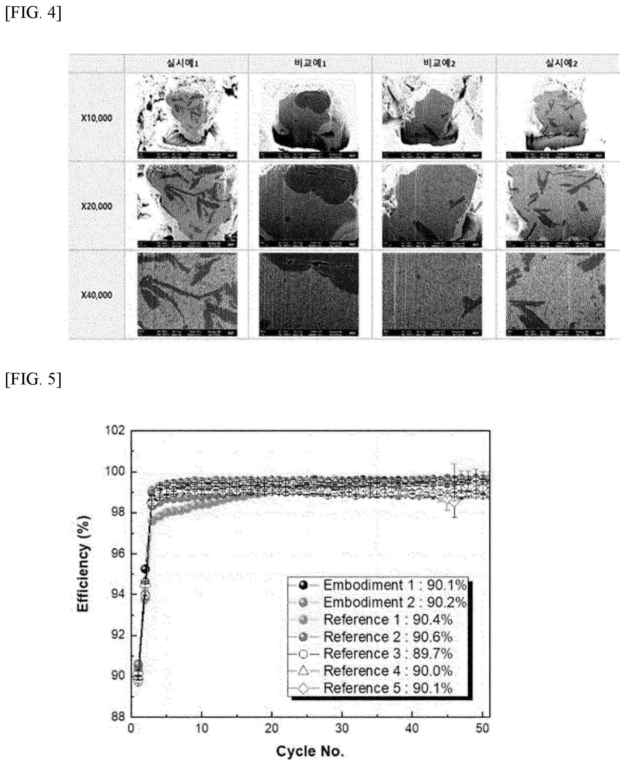

FIG. 4 shows SEM analysis images at 10,000x, 20,000x, and 40,000x magnifications of cross-sections of negative electrode active materials manufactured according to Examples 1 and 2 and Comparative Examples 1 and 2 of the present invention.

FIG. 5 is a graph showing charge-discharge efficiency up to 50 cycles of negative electrode active materials manufactured according to Examples 1 and 2 and Comparative Examples 1 and 2 of the present invention.

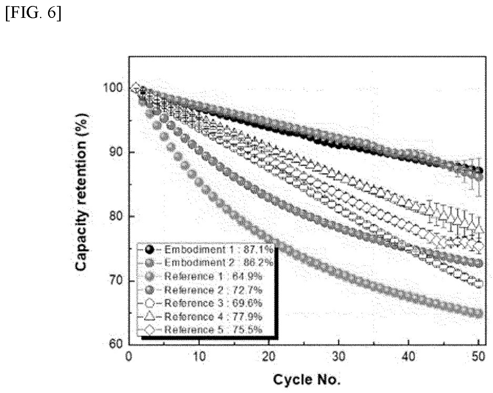

FIG. 6 is a graph showing capacity retention rates up to 50 cycles of negative electrode active materials manufactured according to Examples 1 and 2 and Comparative Examples 1 and 2 of the present invention.

[MODE FOR CARRYING OUT THE INVENTION]

In the present specification, terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

In the present specification, when a part is referred to as "comprising, including" a certain component, it means that it may further include other components rather than excluding other components, unless specifically stated to the contrary.

In the present specification, the terminology used is merely for the purpose of describing particular embodiments and is not intended to be limiting of the present invention. The singular forms used herein include plural forms as well, unless the phrases clearly indicate the opposite meaning. As used in the specification, the meaning of "comprising" specifies specific characteristics, regions, integers, steps, operations, elements, and/or components, but does not exclude the presence or addition of other characteristics, regions, integers, steps, operations, elements, and/or components.

In the present specification, the term "combination thereof" included in a Markush-type expression means a mixture or combination of one or more selected from the group consisting of the components described in the Markush-type expression, and means including one or more selected from the group consisting of the components.

In the present specification, when a part is referred to as being "on" or "above" another part, it may be directly on or above the other part, or another part may be interposed therebetween. In contrast, when a part is referred to as being "directly on" another part, no other part is interposed therebetween.

In the present specification, D10 refers to the particle size at 10% by volume in a cumulative particle size distribution curve (cumulative size-distribution curve), D50 refers to the particle size at 50% by volume, D90 refers to the particle size at 90%, and D99 refers to the particle size at 99%.

Unless defined otherwise, all terms including technical and scientific terms used herein have the same meaning as commonly understood by one of ordinary skill in the art to which the present invention belongs. Terms defined in commonly used dictionaries are further interpreted as having meanings consistent with the relevant technical literature and the presently disclosed content, and are not interpreted in an idealized or overly formal sense unless defined so.

Also, unless specifically mentioned, % means % by weight, and 1 ppm is 0.0001% by weight.

Hereinafter, embodiments of the present invention will be described in detail so that those of ordinary skill in the art to which the present invention belongs can easily practice the invention. However, the present invention may be implemented in various different forms and is not limited to the embodiments described herein.

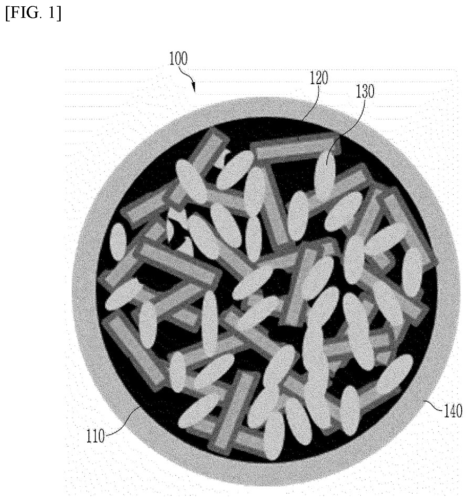

FIG. 1 shows a schematic diagram of a negative electrode active material for a lithium secondary battery having a silicon-carbon composite structure according to an embodiment of the present invention.

Referring to FIG. 1, a negative electrode active material 100 for a lithium secondary battery according to an embodiment includes: a silicon-carbon composite core portion having a structure in which silicon nanoparticles 130 and crystalline carbon particles 120 are bound within an amorphous carbon matrix 110; and an amorphous carbon coating layer 140 positioned on the core portion, wherein the crystalline carbon particles 120 may have an average particle diameter (D50) in a range of 8 $\mu$m to 10 $\mu$m and a bulk density of 0.2 g/cc or less.

The crystalline carbon particles 120 may include graphite, and since they may refer to graphite in an embodiment of the present invention, they are described as crystalline carbon (graphite) hereinafter.

The crystalline carbon (graphite) particles may have an average particle diameter (D50) of 8 $\mu$m to 10 $\mu$m. Specifically, the average particle diameter (D50) may be 9 $\mu$m to 10 $\mu$m.

When the average particle diameter of the crystalline carbon (graphite) particles is included in the range of 8 $\mu$m to 10 $\mu$m, a large number of crystalline carbon (graphite) particles are included inside the precursor during precursor manufacture through spray drying, thereby complementing charge-discharge reversibility and improving lifespan characteristics. On the other hand, when the average particle diameter of the crystalline carbon (graphite) particles is less than 8 $\mu$m, the number of crystalline carbon (graphite) particles included in the amorphous carbon matrix increases as the average particle diameter of the crystalline carbon (graphite) particles decreases. That is, the number and volume of crystalline carbon (graphite) particles that the amorphous carbon matrix must capture increase. Accordingly, there may be a problem that the specific surface area increases as the internal pores of the silicon-crystalline carbon (graphite) particles increase, and lifespan characteristics deteriorate. In addition, as the crystalline carbon (graphite) particles are smaller, the number of particles increases at the same parts by weight, and at this time, deterioration of efficiency and lifespan characteristics may occur due to a large amount of SEI layer generated at the edge portions of the exposed crystalline carbon (graphite). When the average particle diameter of the crystalline carbon (graphite) particles exceeds 10 $\mu$m, the size of the crystalline carbon (graphite) particles relatively increases, so that the crystalline carbon (graphite) particles may not be evenly distributed or included inside the silicon-crystalline carbon (graphite) particles during spray drying. For this reason, a problem of reduced discharge efficiency and lifespan may occur.

In one embodiment, the bulk density of the crystalline carbon (graphite) may be 0.2 g/cc or less. Specifically, it may be 0.05 to 0.2 g/cc. More specifically, it may be 0.05 to 0.160 g/cc, and more specifically, 0.104 to 0.160 g/cc.

When the bulk density of the crystalline carbon (graphite) is included in the aforementioned range, there may be a difference in the degree of dispersion of the crystalline carbon (graphite) inside the negative electrode active material according to the bulk density, but the probability that a large amount of crystalline carbon (graphite) is included inside the material increases, so that charge-discharge reversibility can be complemented and improved. On the other hand, when the bulk density of the crystalline carbon (graphite) exceeds the upper limit of the aforementioned range, large crystalline carbon (graphite) particles having a volume average particle diameter of D50 or more cannot be distributed inside the negative electrode active material, so lifespan deterioration due to a decrease in charge-discharge reversibility may occur. Also, when it falls below the lower limit of the aforementioned range, the number of crystalline carbon (graphite) particles that the pitch included in the amorphous carbon matrix must capture increases, and accordingly, a problem occurs that the inside of the silicon-carbon (Si-C) material structure is not densely formed. Therefore, in this case, side reactions occur due to an increase in specific surface area, and there is a problem that expansion and lifespan characteristics deteriorate due to the absence of a pitch-derived carbon layer that effectively alleviates expansion.

Specifically, when the bulk density of the crystalline carbon (graphite) increases at the same particle size, the crystalline carbon (graphite) particles may not be evenly distributed inside the silicon-carbon negative electrode active material. According to an embodiment of the present invention, when mixing silicon nanoparticles and crystalline carbon (graphite) and then performing spray drying, the heavier the crystalline carbon (graphite) particles are, the stronger the tendency for the crystalline carbon (graphite) particles to separate from the droplet and be obtained separately appears, rather than the tendency to assemble into secondary particles together with the silicon nanoparticles. Due to this, the crystalline carbon (graphite) cannot be embedded in the silicon-carbon negative electrode active material, reducing charge-discharge reversibility, that is, cycle efficiency, and potentially causing a problem of reducing the lifespan of the electrode.

For the average particle diameter of the crystalline carbon particles 120 included in the negative electrode active material for a lithium secondary battery according to an embodiment, the SPAN index calculated by the following Equation 1 may be less than 1.5.

<Equation 1>

$$SPAN = (D90 - D10) / D50$$

(D10, D50, and D90 mean particle sizes at 10%, 50%, and 90% by volume in the cumulative size-distribution curve of the crystalline carbon particles)
The crystalline carbon particles may include graphite, and since they may refer to graphite in an embodiment of the present invention, they are described as crystalline carbon (graphite) hereinafter.

When the SPAN index is included in the aforementioned range, a large number of crystalline carbon (graphite) particles can be included in the negative electrode active material, so that charge-discharge efficiency and lifespan characteristics can be improved. On the other hand, when the SPAN index is outside the aforementioned range, crystalline carbon (graphite) particles cannot be distributed in the spray-dried semi-finished product, so charge-discharge efficiency decreases in the final negative electrode active material product, which may cause a problem of lifespan deterioration.

In the negative electrode active material for a lithium secondary battery according to an embodiment, the amorphous carbon matrix 110 may be a coal-based pitch having a fixed carbon ratio of 50% or more and a beta-resin (β-resin) content of 20% or more. The ratio of the fixed carbon may be more preferably in the range of 60% to 80%.

As the fixed carbon content of the coal-based pitch increases, it can generate a conductive path with Si, which has low self-conductivity, thereby inducing an increase in capacity and efficiency. When the fixed carbon content satisfies the above range, internal pores of the negative electrode active material of the present embodiment can be reduced. Accordingly, side reactions with the electrolyte can also be reduced, contributing to an increase in the initial efficiency of the battery.

The beta-resin (β-resin) value of the coal-based pitch may be 20% or more, more specifically, in the range of 25% to 40% or 25% to 30%.

Specifically, the beta-resin (β-resin) value means a value excluding the quinoline content from the benzene-insoluble content. This beta-resin value is proportional to caking property. In the present embodiment, since the coal-based pitch having a beta-resin (β-resin) value satisfying the above range is included, the porous structure of the silicon-carbon composite can be maintained more stably. Accordingly, when the negative electrode active material according to the present embodiment is employed, a lithium secondary battery having excellent lifespan characteristics and electrode plate expansion characteristics can be implemented.

The content of the amorphous carbon matrix 110 in the negative electrode active material 100 for a lithium secondary battery according to an embodiment may be less than 35% by weight based on the total weight of the negative electrode active material 100. Specifically, it may be in the range of 25% by weight to 35% by weight. More specifically, it may be in the range of 25% by weight to 30% by weight. More specifically, it may be in the range of 25% by weight to 28% by weight.

When the content of the amorphous carbon matrix is included in the aforementioned range, the amorphous carbon matrix can capture the silicon nanoparticles, crystalline carbon (graphite), and carbon nanotubes (CNTs) 150, and act as a protective layer that suppresses expansion of the three raw materials. It can also serve as a conductive matrix that supplements the low conductivity of silicon. In addition, since lithium ions are stored and released even within the amorphous carbon matrix, it is possible to prevent a phenomenon in which the negative electrode layer expands or is damaged due to lithium ions being concentrated only in silicon. On the other hand, if it is outside the aforementioned range, it may not capture the silicon nanoparticles, crystalline carbon (graphite), and carbon nanotubes (CNTs) 150, so the amorphous carbon matrix may not function as a protective layer. This may be a factor causing lifespan deterioration of the battery due to expansion of the negative electrode layer. In particular, when the content of the amorphous carbon matrix exceeds 30%, amorphous carbon domains are formed in a wide area within the material, and a problem may occur in which lifespan deteriorates as the low initial efficiency characteristics of amorphous carbon are expressed.

The content of the silicon nanoparticles 130 in the negative electrode active material 100 for a lithium secondary battery according to an embodiment may be 40% by weight to 60% by weight based on the total weight of the negative electrode active material. Specifically, it may be in the range of 43% by weight to 57% by weight. More specifically, it may be in the range of 46% by weight to 54% by weight.

When the content of the silicon nanoparticles is included in the aforementioned range, the silicon nanoparticles, crystalline carbon (graphite), and carbon nanotubes (CNTs) 150 can be stably captured within the amorphous carbon matrix. Accordingly, in the silicon nanoparticles stably captured within the amorphous carbon matrix, the expansion phenomenon due to insertion and desorption of lithium ions can be effectively suppressed. In addition, the low conductivity of silicon can be supplemented as the silicon nanoparticles and the conductive carbon material are appropriately contained in the negative electrode active material. Also, since silicon and the carbon material may be appropriately distributed, lithium ions are stored and released, thereby preventing a phenomenon in which the negative electrode layer expands or is damaged due to lithium ions being concentrated only in silicon. On the other hand, when the content of silicon nanoparticles is outside the aforementioned lower limit range, it is difficult to express high capacity, and a problem may occur in which initial efficiency decreases because amorphous carbon domains are formed at a high ratio. Also, when the content of silicon nanoparticles exceeds the upper limit of the aforementioned range, the number of silicon nanoparticles is large, so capturing within the amorphous carbon matrix may not be easy. Accordingly, it is difficult to effectively control the expansion of silicon nanoparticles, which may cause performance deterioration.

The average particle diameter (D50) of the silicon nanoparticles 130 included in the negative electrode active material 100 for a lithium secondary battery according to an embodiment may be 50 nm to 150 nm.

The crystalline carbon particles 120 included in the negative electrode active material 100 for a lithium secondary battery according to an embodiment may include at least one selected from artificial graphite, flake graphite, earthy graphite, and natural graphite.

The content of the crystalline carbon particles 120 included in the negative electrode active material 100 for a lithium secondary battery according to an embodiment may be in a range of 13% by weight to less than 20% by weight based on the total weight of the negative electrode active material. Specifically, it may be in the range of 15% by weight to 19% by weight. More specifically, it may be in the range of 17% by weight to 18% by weight.

The crystalline carbon particles may include graphite, and since they may refer to graphite in an embodiment of the present invention, they are described as crystalline carbon (graphite) hereinafter.

When the content of the crystalline carbon (graphite) particles is included in the aforementioned range, the silicon nanoparticles, crystalline carbon (graphite), and carbon nanotubes (CNTs) 150 can be stably captured within the amorphous carbon matrix. In particular, since a large number of crystalline carbon (graphite) particles are included in the amorphous carbon matrix, charge-discharge reversibility can be complemented, improving lifespan characteristics. In addition, silicon and the carbon material are appropriately distributed so that lithium ions are stored and released, thereby improving conductivity while preventing a phenomenon in which the negative electrode layer expands or is damaged due to lithium ions being concentrated only in silicon. On the other hand, when the content of crystalline carbon (graphite) particles is outside the aforementioned range, a problem may occur in which initial efficiency decreases because amorphous carbon domains are formed at a high ratio. Crystalline carbon (graphite) particles may not be evenly distributed or included inside the silicon-crystalline carbon (graphite) particles. For this reason, a problem of reduced discharge efficiency and lifespan may occur.

The content of the amorphous carbon coating layer 140 included in the negative electrode active material 100 for a lithium secondary battery according to an embodiment may be 2% by weight to 5% by weight based on the total weight of the negative electrode active material.

When the content of the amorphous carbon coating layer is included in the aforementioned range, it is possible to finally coat silicon nanoparticles that were not captured inside the amorphous carbon matrix and were partially exposed to the surface. That is, silicon nanoparticles can be completely captured within the amorphous carbon layer and protected. In addition, there is an effect of evenly distributing the silicon nanoparticles within the carbon material, preventing a phenomenon in which the negative electrode layer expands or is damaged.

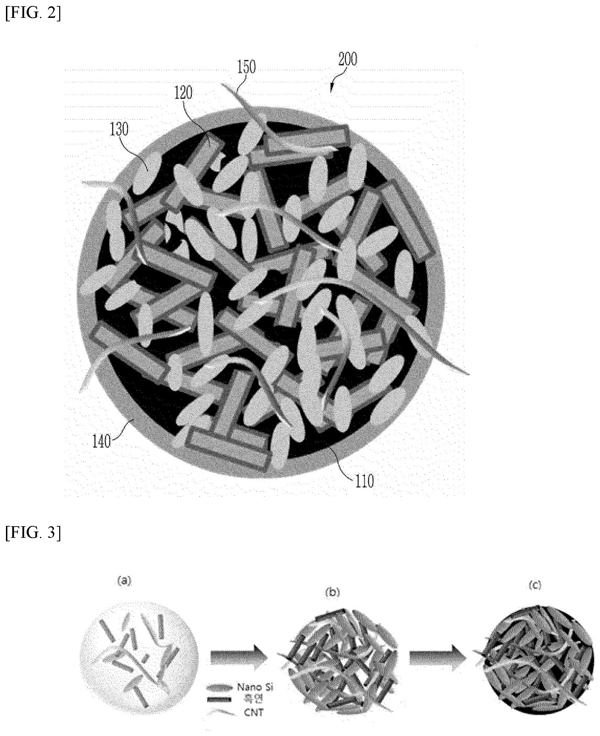

FIG. 2 shows a schematic diagram of a negative electrode active material 200 for a lithium secondary battery having a silicon-carbon composite structure including carbon nanotubes (CNTs) in a core portion according to an embodiment of the present invention.

Referring to FIG. 2, the negative electrode active material 200 for a lithium secondary battery according to an embodiment may further include carbon nanotubes (CNTs) 150 in the core portion.

The content of the carbon nanotubes (CNTs) 150 additionally included in the negative electrode active material may be 0.5% by weight to 2% by weight based on the total weight of carbon included in the negative electrode active material.

The average particle diameter (D50) of the negative electrode active material for a lithium secondary battery according to an embodiment may be 10 μm to 15 μm. However, the average particle diameter (D50) of the negative electrode active material for a lithium secondary battery of the present invention can be appropriately adjusted as needed, and the present invention is not limited to the aforementioned range.

The BET specific surface area of the negative electrode active material for a lithium secondary battery according to an embodiment may be 4.00 m$^2$/g to 9.00 m$^2$/g. However, the BET specific surface area of the negative electrode active material can be appropriately adjusted as needed, and is not limited to the aforementioned range.

When the BET specific surface area of the negative electrode active material is included in the aforementioned range, excellent performance can be implemented in terms of battery capacity and cycle life. On the other hand, when the BET specific surface area of the negative electrode active material exceeds the upper limit of the aforementioned range, a problem of lifespan deterioration due to side reactions with the electrolyte may occur.

The discharge capacity of the negative electrode active material for a lithium secondary battery according to an embodiment may be 1600 mAh/g to 1700 mAh/g.

The initial efficiency of the negative electrode active material for a lithium secondary battery according to an embodiment may be 86.2% to 87.0%.

The capacity retention rate based on 50 cycles of the negative electrode active material for a lithium secondary battery according to an embodiment may be 68.5% to 75.0%.

However, the discharge capacity, initial efficiency, and capacity retention rate based on 50 cycles of the negative electrode active material for a lithium secondary battery according to an embodiment may vary partly depending on experimental conditions, and the present invention is not limited to the above numerical ranges.

Next, a method for manufacturing a negative electrode active material according to another embodiment of the present invention will be described.

A method for manufacturing a negative electrode active material 100 according to another embodiment includes: preparing a slurry by mixing silicon nanoparticles 130, crystalline carbon particles 120, soft carbon, and a solvent; forming a silicon-carbon composite precursor; and forming an amorphous carbon coating layer 140 by mixing an amorphous carbon material with the silicon-carbon composite precursor and then heat-treating the mixture, wherein an average particle diameter of the crystalline carbon particles 120 is 8 $\mu$m to 10 $\mu$m, and a bulk density of the crystalline carbon particles 120 may be 0.2 g/cc or less.

The crystalline carbon particles may include graphite, and since they may refer to graphite in an embodiment of the present invention, they are described as crystalline carbon (graphite) hereinafter.

The crystalline carbon (graphite) particles may have an average particle diameter (D50) of 8 $\mu$m to 10 $\mu$m. Specifically, the average particle diameter (D50) may be 9 $\mu$m to 10 $\mu$m.

When the average particle diameter of the crystalline carbon (graphite) particles is included in the aforementioned range, a large number of crystalline carbon (graphite) particles are included inside the precursor during precursor manufacture through spray drying, thereby complementing charge-discharge reversibility and improving lifespan characteristics. On the other hand, when the average particle diameter of the crystalline carbon (graphite) particles is less than 8 $\mu$m, the number of crystalline carbon (graphite) particles included in the amorphous carbon matrix increases as the average particle diameter of the crystalline carbon (graphite) particles decreases. That is, the number and volume of crystalline carbon (graphite) particles that the amorphous carbon matrix must capture increase. Accordingly, there may be a problem that the specific surface area increases as the internal pores of the silicon-crystalline carbon (graphite) particles increase, and lifespan characteristics deteriorate. In addition, as the crystalline carbon (graphite) particles are smaller, the number of particles increases at the same parts by weight, and at this time, deterioration of efficiency and lifespan characteristics may occur due to a large amount of SEI layer generated at the edge portions of the exposed crystalline carbon (graphite). When the average particle diameter of the crystalline carbon (graphite) particles exceeds 10 $\mu$m,

the size of the crystalline carbon (graphite) particles relatively increases, so that the crystalline carbon (graphite) particles may not be evenly distributed or included inside the silicon-crystalline carbon (graphite) particles during spray drying. For this reason, a problem of reduced discharge efficiency and lifespan may occur.

In another embodiment, the bulk density of the crystalline carbon particles may be 0.2 g/cc or less. Specifically, it may be 0.05 to 0.2 g/cc. More specifically, it may be 0.05 to 0.160 g/cc, and more specifically, 0.104 to 0.160 g/cc.

The crystalline carbon particles may include graphite, and since they may refer to graphite in an embodiment of the present invention, they are described as crystalline carbon (graphite) hereinafter.

When the bulk density of the crystalline carbon (graphite) is included in the aforementioned range, there may be a difference in the degree of dispersion of the crystalline carbon (graphite) inside the negative electrode active material according to the bulk density, but the probability that a large amount of crystalline carbon (graphite) is included inside the material increases, so that charge-discharge reversibility can be complemented and improved. On the other hand, when the bulk density of the crystalline carbon (graphite) exceeds the upper limit of the aforementioned range, large crystalline carbon (graphite) particles having a volume average particle diameter of D50 or more cannot be distributed inside the negative electrode active material, so lifespan deterioration due to a decrease in charge-discharge reversibility may occur. Also, when it falls below the lower limit of the aforementioned range, the number of particles that the pitch included in the amorphous carbon matrix must capture increases, and accordingly, a problem occurs that the inside of the silicon-carbon (Si-C) material structure is not densely formed. Therefore, in this case, side reactions occur due to an increase in specific surface area, and there is a problem that expansion and lifespan characteristics deteriorate due to the absence of a pitch-derived carbon layer that effectively alleviates expansion.

Specifically, when the bulk density of the crystalline carbon (graphite) increases at the same particle size, the crystalline carbon (graphite) particles may not be evenly distributed inside the silicon-carbon negative electrode active material. According to an embodiment of the present invention, when mixing silicon nanoparticles and crystalline carbon (graphite) and then performing spray drying, the heavier the crystalline carbon (graphite) particles are, the stronger the tendency for the crystalline carbon (graphite) particles to separate from the droplet and be obtained separately appears, rather than the tendency to assemble into secondary particles together with the silicon nanoparticles. Due to this, the crystalline carbon (graphite) cannot be embedded in the silicon-carbon negative electrode active material, reducing charge-discharge reversibility, that is, cycle efficiency, and potentially causing a problem of reducing the lifespan of the electrode.

The step of preparing the slurry in the method for manufacturing a negative electrode active material according to another embodiment may include mixing a silicon raw material with a solvent to form a mixture, and the silicon raw material may be added in an amount of 8% by weight to 20% by weight based on the total weight of the mixture. However, the input amount of the silicon raw material may be appropriately adjusted as needed, and the present invention is not limited to the above range.

The solvent to be mixed may be at least one selected from ethanol and isopropyl alcohol (IPA).

The solvent is applied to prevent oxidation of silicon when performing a mechanical milling process of silicon particles.

FIG. 3 shows a schematic diagram according to a manufacturing process of a negative electrode active material 200 having a silicon-carbon composite structure including carbon nanotubes according to an embodiment of the present invention.

Referring to FIG. 3, the step of preparing the slurry in the method for manufacturing a negative electrode active material 100 according to another embodiment may include additionally adding carbon nanotubes (CNTs) 150. Step (a) of FIG. 3 corresponds to the step of preparing a slurry by mixing silicon nanoparticles 130, crystalline carbon (graphite) particles 120, soft carbon, and a solvent in the method for manufacturing a negative electrode active material of the present invention. In step (a), a small amount of carbon nanotubes (CNTs) 150 may be mixed together as needed to form slurry droplets. Step (b) of FIG. 3 is a step of forming a silicon-carbon composite precursor, showing that the precursor is manufactured by spray drying the slurry. At this time, the particle diameter of the silicon-carbon composite precursor formed by spray drying may be similar to the average particle diameter (D50) of the crystalline carbon (graphite) particles 120 included in the slurry. Step (c) of FIG. 3 shows a silicon-carbon composite negative electrode active material obtained by carbonizing the spray-dried precursor. After the carbonization process, as shown in the structural diagram of step (c) of FIG. 3, a silicon-carbon composite negative electrode active material 200 in which silicon nanoparticles 130, crystalline carbon (graphite) particles 120, and carbon nanotubes (CNTs) 150 are all captured within the amorphous carbon matrix 110 can be manufactured. However, as shown in the figure, some of the silicon nanoparticles 130, crystalline carbon (graphite) particles 120, and carbon nanotubes (CNTs) 150 may be exposed on the surface of the negative electrode active material, and accordingly, the amorphous carbon coating layer 140 can be formed on the surface of the negative electrode active material to completely protect the aforementioned materials.

In the step of preparing the slurry of the method for manufacturing a negative electrode active material 100 according to another embodiment, the soft carbon may be a coal-based pitch having a fixed carbon ratio of 50% or more and a beta-resin (β-resin) content of 20% or more.

As the fixed carbon content of the coal-based pitch increases, it can generate a conductive path with Si, which has low self-conductivity, thereby inducing an increase in capacity and efficiency. When the fixed carbon content satisfies the above range, internal pores of the negative electrode active material of the present embodiment can be reduced. Accordingly, side reactions with the electrolyte can also be reduced, contributing to an increase in the initial efficiency of the battery.

The beta-resin (β-resin) value of the coal-based pitch may be 20% or more, more specifically, in the range of 25% to 40% or 25% to 30%.

Specifically, the beta-resin (β-resin) value means a value excluding the quinoline content from the benzene-insoluble content. This beta-resin value is proportional to caking property. In the present embodiment, since the coal-based pitch having a beta-resin (β-resin) value satisfying the above range is included, the porous structure of the silicon-carbon composite can be maintained more stably. Accordingly, when the negative electrode active material according to the present embodiment is employed, a lithium secondary battery having excellent lifespan characteristics and electrode plate expansion characteristics can be implemented.

In the step of forming the amorphous carbon coating layer 140 of the method for manufacturing a negative electrode active material 100 according to another embodiment, the amorphous carbon material may include at least one selected from petroleum-based pitch having a softening point of less than 250°C, coal tar, PAA, PVA, Sucrose, and Glucose.

The step of forming the silicon-carbon composite precursor of the method for manufacturing a negative electrode active material 100 according to another embodiment may include manufacturing the precursor by spray drying the slurry.

Hereinafter, preferred Preparation Examples, Examples, Comparative Examples, and Experimental Examples according thereto of the present invention will be described. However, the following Examples are only preferred embodiments of the present invention, and the present invention is not limited to the following Examples.

**Preparation Example - Preparation of Silicon Nanoparticle Powder**

A poly silicon (poly-Si) raw material was prepared, mixed with 99.9% purity anhydrous ethanol, and introduced into a pulverizer. At this time, the poly silicon raw material was mixed at a ratio of 20% of the total mixture weight. The weight ratio of the poly silicon raw material to zirconia balls was set to 5:1, and zirconia balls with a size of 0.1 mm were introduced into the pulverizer. Thereafter, the inside of the pulverizer was rotated at a speed of 2500 rpm to perform a nanosizing process of the silicon raw material. The silicon slurry obtained after the nanosizing process was obtained in the form of powdered silicon nanoparticles by a spray drying method.

As the average particle diameter (D50) of crystalline carbon (graphite) increased, the particle size span generally tended to decrease. Also, overall, the tap density tended to increase as the bulk density of crystalline carbon (graphite) increased, and the particle size Span tended to decrease as the bulk density and tap density of crystalline carbon (graphite) increased.

The inventors of the present invention found that the silicon-carbon composite negative electrode active material exhibits excellent electrochemical properties and has critical significance when simultaneously satisfying the conditions that the average particle diameter D50 of crystalline carbon (graphite) is 8 to 10 $\mu$m and the bulk density is about 0.2 g/cc or less. According to Table 2 above, it was confirmed that the negative electrode active materials of Examples 1 and 2, which simultaneously satisfy the ranges of the average particle diameter D50 of crystalline carbon (graphite) being 8 to 10 $\mu$m and the bulk density being about 0.2 g/cc or less, had improved 3rd cycle efficiency and 50 cycle lifespan characteristics compared to the Comparative Examples.

**Claims**

1.  A negative electrode active material for a lithium secondary battery, comprising:

    a silicon-carbon composite core part having a structure in which silicon nanoparticles and crystalline carbon particles are bound within an amorphous carbon matrix; and
    an amorphous carbon coating layer positioned on the core part,
    wherein an average particle diameter ($D_{50}$) of the crystalline carbon particles is 8 $\mu$m to 10 $\mu$m, and
    a bulk density of the crystalline carbon particles is 0.2 g/cc or less.

2.  The negative electrode active material for a lithium secondary battery of claim 1,

    wherein a SPAN index calculated by the following Equation 1 with respect to the average particle diameter of the crystalline carbon particles is less than 1.5:

    $$<\text{Equation 1}>$$

    $$SPAN = (D_{90} - D_{10}) / D_{50}$$

    (wherein $D_{10}$, $D_{50}$, and $D_{90}$ denote particle sizes at 10%, 50%, and 90% by volume ratio, respectively, in a cumulative size-distribution curve of the crystalline carbon particles).

3.  The negative electrode active material for a lithium secondary battery of claim 1,
    wherein a content of the amorphous carbon matrix in the negative electrode active material is less than 30% by weight based on a total weight of the negative electrode active material.

4.  The negative electrode active material for a lithium secondary battery of claim 1,
    wherein a content of the silicon nanoparticles in the negative electrode active material is 40% by weight to 60% by weight based on a total weight of the negative electrode active material.

5.  The negative electrode active material for a lithium secondary battery of claim 1,
    wherein an average particle diameter ($D_{50}$) of the silicon nanoparticles is 50 nm to 150 nm.

6.  The negative electrode active material for a lithium secondary battery of claim 1,
    wherein a content of the crystalline carbon particles is in a range of 13% by weight to less than 20% by weight based on a total weight of the negative electrode active material.

7.  The negative electrode active material for a lithium secondary battery of claim 1,
    wherein a content of the amorphous carbon coating layer included in the negative electrode active material is 2% by weight to 5% by weight based on a total weight of the negative electrode active material.

8.  The negative electrode active material for a lithium secondary battery of claim 1,

    wherein the negative electrode active material further comprises carbon nanotubes (CNTs) in the core part, and
    a content of the carbon nanotubes (CNTs) is 0.5% by weight to 2% by weight based on a total weight of silicon included in the negative electrode active material.

9.  The negative electrode active material for a lithium secondary battery of claim 1,
    wherein an average particle diameter ($D_{50}$) of the negative electrode active material is 10 $\mu$m to 15 $\mu$m.

10. The negative electrode active material for a lithium secondary battery of claim 1,
    wherein a BET specific surface area of the negative electrode active material is 4.00 m$^2$/g to 9.00 m$^2$/g.

11. A method for manufacturing a negative electrode active material for a lithium secondary battery, comprising:

> preparing a slurry by mixing silicon nanoparticles, crystalline carbon particles, soft carbon, and a solvent;
> forming a silicon-carbon composite precursor; and
> forming an amorphous carbon coating layer by mixing an amorphous carbon material with the silicon-carbon composite precursor and performing a heat treatment,
> wherein an average particle diameter ($D_{50}$) of the crystalline carbon particles is 8 $\mu$m to 10 $\mu$m, and
> a bulk density of the crystalline carbon particles is 0.2 g/cc or less.

12. The method for manufacturing a negative electrode active material for a lithium secondary battery of claim 11,
wherein the soft carbon is a coal-based pitch having a fixed carbon ratio of 50% or more and a beta resin ($\beta$-resin) content of 20% or more.

13. The method for manufacturing a negative electrode active material for a lithium secondary battery of claim 11,
wherein, in the step of forming the amorphous carbon coating layer, the amorphous carbon material comprises at least one selected from petroleum-based pitch or coal tar having a softening point of less than 250°C, PAA, PVA, sucrose, and glucose.

14. The method for manufacturing a negative electrode active material for a lithium secondary battery of claim 11,
wherein the step of forming the silicon-carbon composite precursor comprises spray drying the slurry to manufacture the precursor.

[FIG. 1]

[FIG. 2]

[FIG. 3]

[FIG. 4]

[FIG. 5]

[FIG. 6]

## INTERNATIONAL SEARCH REPORT

| International application No. |
|---|
| **PCT/KR2024/012647** |

| | |
|---|---|
| **A.** | **CLASSIFICATION OF SUBJECT MATTER** |
| | **H01M 4/36**(2006.01)i; **H01M 4/587**(2010.01)i; **H01M 4/62**(2006.01)i; **C01B 32/956**(2017.01)i; **H01M 4/02**(2006.01)i |

According to International Patent Classification (IPC) or to both national classification and IPC

| | |
|---|---|
| **B.** | **FIELDS SEARCHED** |

Minimum documentation searched (classification system followed by classification symbols)

    H01M 4/36(2006.01); C01B 32/05(2017.01); C01B 32/21(2017.01); H01M 10/0525(2010.01); H01M 4/38(2006.01); H01M 4/587(2010.01)

Documentation searched other than minimum documentation to the extent that such documents are included in the fields searched

    Korean utility models and applications for utility models: IPC as above
    Japanese utility models and applications for utility models: IPC as above

Electronic data base consulted during the international search (name of data base and, where practicable, search terms used)

    eKOMPASS (KIPO internal) & keywords: 리튬 이차전지(lithium secondary battery), 음극 활물질(anode active material), 실리콘 나노입자(silicon nano particle), 비정질 탄소(amorphous carbon), 결정질 탄소(crystalline carbon), 코어 (core), 코팅(coating), 입경(particle size), 벌크 밀도(bulk density), 흑연(graphite)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2019-0132545 A (SHOWA DENKO K.K.) 27 November 2019 (2019-11-27)<br>    See claims 1 and 9; and paragraphs [0004], [0005], [0040], [0042], [0052], [0057], [0059]-[0062], [0066], [0070], [0071], [0089], [0090], [0126] and [0157]. | 1,3-7,9,10 |
| Y | | 2,8,11-14 |
| Y | KR 10-2018-0070302 A (POSCO et al.) 26 June 2018 (2018-06-26)<br>    See claims 1, 3, 4 and 15; paragraph [0150]; and table 1. | 2,11-14 |
| Y | KR 10-2022-0077281 A (TOKAI CARBON KOREA CO., LTD.) 09 June 2022 (2022-06-09)<br>    See claims 1, 6 and 12. | 8 |
| A | JP 2019-535096 A (IMERYS GRAPHITE & CARBON SWITZERLAND LTD.) 05 December 2019 (2019-12-05)<br>    See claims 1-15. | 1-14 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2024** | **29 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/012647** |

**C.      DOCUMENTS CONSIDERED TO BE RELEVANT**

| Category* | Citation of document, with indication, where appropriate, of the relevant passages | Relevant to claim No. |
|---|---|---|
| A | JP 2018-088405 A (MITSUBISHI CHEMICAL HOLDINGS CORP.) 07 June 2018 (2018-06-07)<br>       See claims 1-12. | 1-14 |

Form PCT/ISA/210 (second sheet) (July 2022)

**INTERNATIONAL SEARCH REPORT**
Information on patent family members

International application No.

**PCT/KR2024/012647**

| Patent document cited in search report | | | Publication date (day/month/year) | Patent family member(s) | | | Publication date (day/month/year) |
|---|---|---|---|---|---|---|---|
| KR | 10-2019-0132545 | A | 27 November 2019 | CN | 110998927 | A | 10 April 2020 |
| | | | | EP | 3667782 | A1 | 17 June 2020 |
| | | | | JP | 2020-031597 | A1 | 27 February 2020 |
| | | | | TW | 201921794 | A | 01 June 2019 |
| | | | | WO | 2019-031597 | A1 | 14 February 2019 |
| KR | 10-2018-0070302 | A | 26 June 2018 | KR | 10-2008873 | B1 | 08 August 2019 |
| KR | 10-2022-0077281 | A | 09 June 2022 | CN | 116529908 | A | 01 August 2023 |
| | | | | JP | 2023-552345 | A | 15 December 2023 |
| | | | | KR | 10-2536073 | B1 | 30 May 2023 |
| | | | | US | 2024-0025746 | A1 | 25 January 2024 |
| | | | | WO | 2022-119197 | A1 | 09 June 2022 |
| JP | 2019-535096 | A | 05 December 2019 | CN | 109690830 | A | 26 April 2019 |
| | | | | EP | 3510653 | A2 | 17 July 2019 |
| | | | | KR | 10-2019-0047719 | A | 08 May 2019 |
| | | | | US | 11081690 | B2 | 03 August 2021 |
| | | | | US | 12087936 | B2 | 10 September 2024 |
| | | | | US | 2019-0237749 | A1 | 01 August 2019 |
| | | | | US | 2021-0265620 | A1 | 26 August 2021 |
| | | | | WO | 2018-046765 | A2 | 15 March 2018 |
| | | | | WO | 2018-046765 | A3 | 19 April 2018 |
| JP | 2018-088405 | A | 07 June 2018 | JP | 2022-095866 | A | 28 June 2022 |
| | | | | JP | 7067029 | B2 | 16 May 2022 |

Form PCT/ISA/210 (patent family annex) (July 2022)